(19) Europäisches Patentamt
European Patent Office
Office européen des brevets

(11) **EP 3 572 644 A1**

(12) **EUROPEAN PATENT APPLICATION**

(43) Date of publication:
**27.11.2019  Bulletin 2019/48**

(51) Int Cl.:
**F02C 7/36** *(2006.01)*        **F01D 25/16** *(2006.01)*
**F02K 3/06** *(2006.01)*

(21) Application number: **19169449.6**

(22) Date of filing: **16.04.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.05.2018  GB 201808346**

(71) Applicant: **Rolls-Royce plc**
**London SW1E 6AT (GB)**

(72) Inventors:
• **Swift, Andrew**
  **Derby, Derbyshire DE24 8BJ (GB)**
• **Willshee, Matthew**
  **Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **GAS TURBINE ENGINE**

(57)    A gas turbine engine (10) for an aircraft is disclosed. The gas turbine engine (10) comprises a mechanical power converter (42) arranged to receive an input drive (44) and produce an output drive (46). The output drive (46) has the same rotational direction as the input drive (44). The gas turbine engine further comprises a stationary supporting structure arranged to provide a stationary support for the mechanical power converter (42). The stationary supporting structure comprises one or more structural support aerofoils (24a-24h). A method (100) of supporting a mechanical power converter (42) in a gas turbine engine (10) is also disclosed.

Fig.2

**Description**

TECHNICAL FIELD

The present disclosure relates to a gas turbine engine for an aircraft and a method of supporting a mechanical power converter in a gas turbine engine.

BACKGROUND

Known gas turbine engines include a gearbox that receives an input from a core drive shaft and provides an output that is used to drive a fan at a lower rotational speed to the input. In order to provide a static mounting for the gearbox a supporting structure is provided. The supporting structure is adapted to have a suitable level of strength to transmit the restraining torque acting on the supporting structure to restrain the gearbox from moving relative to the engine.

In order to transmit the restraining torque it is known to provide a dedicated supporting structure. The physical properties of such a supporting structure are determined according to the level of force being transmitted to the surrounding engine structure. Because of this constraint on the physical properties of the supporting structure variations in its size and shape are limited. It is therefore known to provide separate non-structural support components to provide other required functions within the engine.

SUMMARY

According to a first aspect there is provided a gas turbine engine for an aircraft, comprising: a mechanical power converter arranged to receive an input drive and produce an output drive, wherein the output drive has the same rotational direction as the input drive; and a stationary supporting structure arranged to provide a stationary support for the mechanical power converter, wherein: the stationary supporting structure comprises one or more structural support aerofoils.

The present disclosure provides a structural support aerofoil fulfilling a combined function of airflow direction and stationary support for the mechanical power converter. In the case of a power converter having co-rotating input and output, the reaction torque at the power converter restraints is reduced, thus allowing the use of a structural support aerofoil. This may reduce the need for a dedicated static structure to restrain the power converter and a separate set of non-structural stationary vanes to direct airflow. The stationary supporting structure of the present disclosure may therefore provide a reduced component count and provide savings in engine size and weight.

Each of the one or more structural support aerofoils may be arranged to both: direct airflow within the gas turbine engine; and transmit a restraint reaction force. This may allow a dual function structural supporting element to be provided.

Each of the one or more structural support aerofoils may be defined by one or more physical characteristics.

The one or more characteristics may each be determined according to a desired level of airflow direction and structural strength of the respective structural support aerofoil. A suitable balance of support and airflow direction functionality may therefore be achieved. The desired level of airflow direction may be sufficient to remove turbulence from an airflow leaving a fan of the engine. The desired level of strength may be sufficient to resist movement of the mechanical power converter relative to the engine.

The one or more physical characteristics may comprise a cross sectional shape of each structural support aerofoil. The cross sectional shape may be determined to provide a desired balance of structural support and airflow direction.

The cross sectional shape may comprise an aerofoil shape defined by a thickness to chord length ratio.

The one or more physical characteristics may comprise a length of each structural support aerofoil. The length of the support aerofoil may be determined to support the mechanical power converter and restrain it from relative movement.

The stationary supporting structure may comprise a plurality of structural support aerofoils.

The number of structural support aerofoils may be determined according to an overall level of airflow direction and restraint force transmission provided by the stationary supporting structure. The overall level may be sufficient to remove turbulence from energised air from the fan and restrain the mechanical power converter from relative movement.

The gas turbine engine may have a rotational axis, and wherein: the plurality of structural support aerofoils may each extend away from the mechanical power converter in a radial direction relative to the rotational axis; and each of the structural support aerofoils may be aligned at the same position along an axial direction aligned with the rotational axis. This may provide a compact arrangement.

The mechanical power converter may comprise an epicyclic gearbox. The epicyclic gearbox may comprise a planetary gearbox.

The planetary gearbox may comprise a ring gear, and wherein the one or more structural support aerofoils may be arranged to provide a stationary support for the ring gear.

The gas turbine engine may further comprise an engine core arranged to receive a core airflow, and wherein the one or more structural support aerofoils may be arranged to direct at least part of the core airflow.

The gas turbine engine may further comprise a splitter, wherein: the splitter may be arranged to separate the core airflow from a bypass airflow arranged to bypass the engine core; and the one or more structural support aerofoils may extend at least partly between the mechanical power converter and the splitter to direct at least a portion of the core airflow.

The gas turbine engine may further comprise a turbine, wherein the input drive may be a drive shaft connecting the mechanical power converter to the turbine.

The gas turbine engine may comprise a fan, wherein the output drive may be a drive shaft connecting the mechanical power converter to the fan.

According to a second aspect there is provided a gas turbine engine for an aircraft, comprising: a mechanical power converter arranged to receive an input drive and produce a output drive, wherein the output drive has the same rotational direction as the input drive; and a dual functioning supporting structure element arranged to provide stationary support for the mechanical power converter and to direct airflow within the gas turbine engine.

According to a third aspect there is provided a method of supporting a mechanical power converter in a gas turbine engine, the mechanical power converter arranged to receive an input drive and produce an output drive, wherein the output drive has the same rotational direction as the input drive, the method comprising: providing a stationary supporting structure comprising one or more structural support aerofoils; directing airflow within the gas turbine engine using the one or more structural support aerofoils; and resisting movement of the mechanical power converter relative to the gas turbine engine using the one of more structural support aerofoils.

Any of the features described above in connection with the first aspect may be used in combination with the second or the third aspect.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity $U_{tip}$. The work done by the fan blades 13 on the flow results in an enthalpy rise dH of the flow. A fan tip loading may be defined as $dH/U_{tip}^2$, where dH is the enthalpy rise (for example the 1-D average enthalpy rise) across the fan and $U_{tip}$ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being $Jkg^{-1}K^{-1}/(ms^{-1})^2$). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 $Nkg^{-1}s$, 105 $Nkg^{-1}s$, 100 $Nkg^{-1}s$, 95 $Nkg^{-1}s$, 90 $Nkg^{-1}s$, 85 $Nkg^{-1}s$ or 80 $Nkg^{-1}s$. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

BRIEF DESCRIPTION OF THE DRAWINGS

Embodiments will now be described by way of example only, with reference to the Figures, in which:

Figure 1 is a sectional side view of a gas turbine engine;

Figure 2 is a close up sectional side view of an upstream portion of a gas turbine engine;

Figure 3 is a partially cut-away view of a gearbox for a gas turbine engine;

Figure 4 is an illustration of the torque acting on the input and output of a mechanical power converter;

Figure 5 is a cross-sectional view through a structural support aerofoil;

Figure 6 is a cross sectional view of the gas turbine engine shown in Figure 2 through the plane marked AA; and

Figure 7 is a method of supporting a mechanical power converter in a gas turbine engine.

DETAILED DESCRIPTION

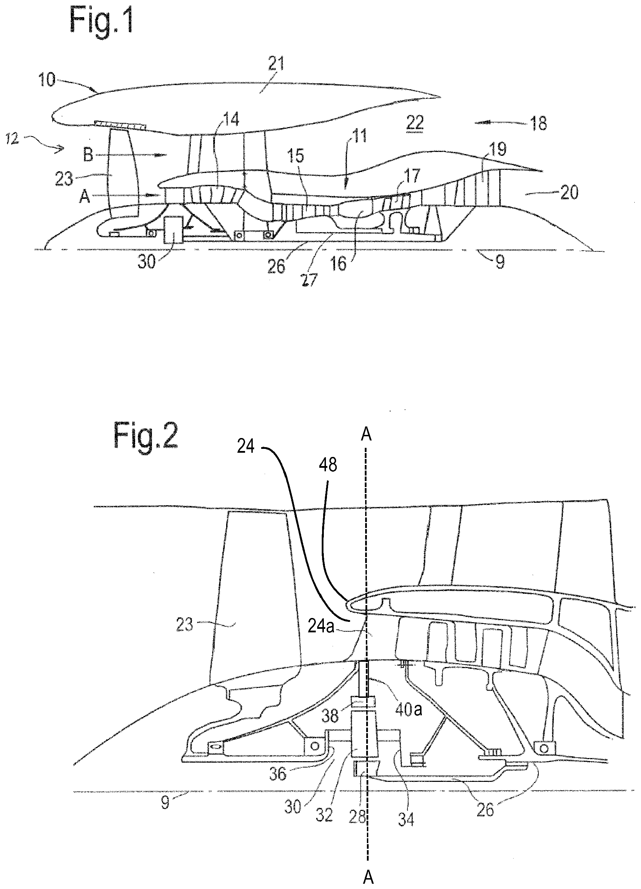

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30. The drive shaft 26 thus provides an input connecting the gearbox 30 to the turbine 19. Another drive shaft 36 provides an output connecting the gearbox to the fan 23.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40a, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

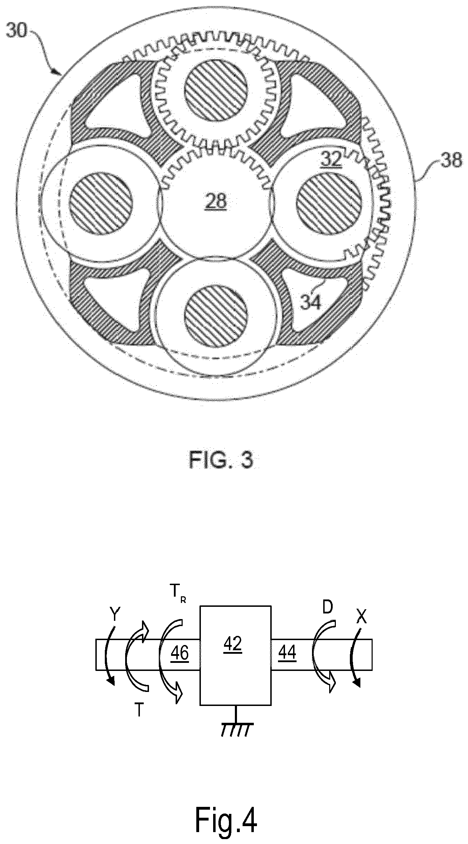

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used.

It will be appreciated that the arrangement shown in Figures 2 and 3 is by way of example only, and various alternatives are within the scope of the present disclosure. By way of further example, the connections (such as the linkage 36 in the Figure 2 example) between the gearbox 30 and other parts of the engine 10 (such as the input shaft 26 and the output shaft) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2.

Accordingly, the present disclosure extends to a gas turbine engine having any arrangement of gearbox styles, support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30, but may comprise another suitable mechanical power converter as described below.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The epicyclic gearbox 30 is arranged to produce an output drive that has the same rotational direction as the input drive. In the example shown in Figures 2 and 3, the output shaft driven by the planet carrier 34 rotates in the same direction as the input drive shaft 26. The epicyclic gearbox 30 therefore has co-rotating input and output drives.

The planetary epicyclic gearbox described above is one example of a mechanical power converter having co-rotating input and output drives. Rather than a planetary epicyclic gearbox, a differential type epicyclic gearbox may be provided in which the ring gear 38 and the planet carrier 34 are both allowed to rotate. The planetary epicyclic gearbox 30 may yet further be replaced by any form of mechanical power converter suitable for converting a high speed, low torque input, to a low speed, high torque output and in which the input and the output are co-rotating. Examples of alternative mechanical power converters may include, but are not limited to, other forms of gearbox, fluid couplings and a coupled motor and generator.

An example of a mechanical power converter is shown schematically in Figure 4. Figure 4 illustrates a mechanical power converter 42 having an input drive 44 and an output drive 46. The input drive 44 is arranged to rotate in a direction X (shown by the arrow X in Figure 4) with the output drive 46 arranged to rotate in a direction Y (shown by the arrow Y in Figure 4). As can be seen in Figure 4, the rotation direction X of the input drive 44 is the same as the rotation direction Y of the output drive 46.

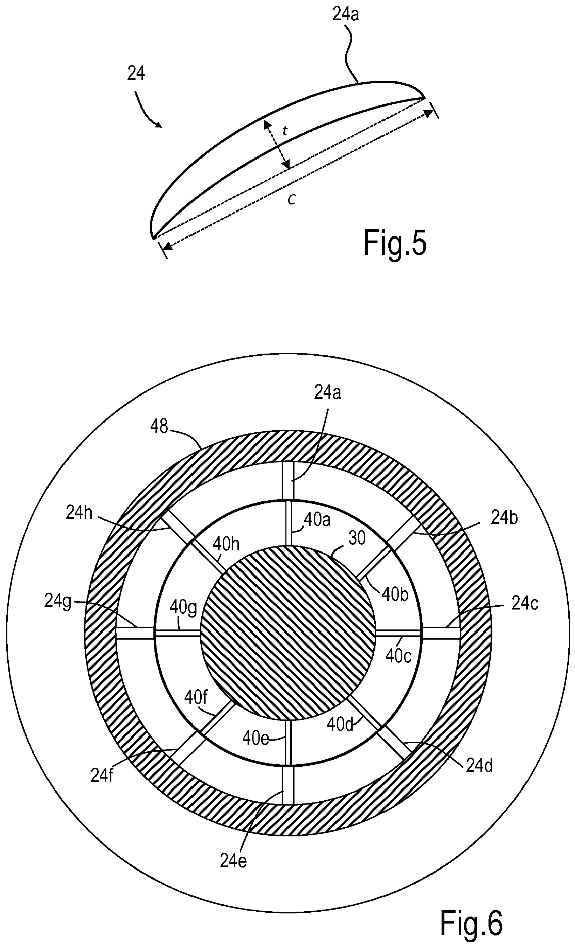

The stationary support structure 24 for the gearbox 30 (or other type of mechanical power converter) comprises one or more structural support aerofoils 24a-24h (only one of which is shown in Figure 2 labelled 24a, and a plurality of which are shown in Figure 6). The structural support aerofoil(s) 24a-24h are each arranged to both direct airflow within the gas turbine engine 10 and also provide a degree of structural support for the gearbox 30. The structural support aerofoil(s) 24a-24h are rigidly coupled (directly or indirectly) to at least part of the gearbox 30, as will be described in more detail below, so as to restrict relative rotation of the gearbox 30 by transmitting retaining force required to keep the gearbox 30 stationary. The gas turbine engine 10 therefore comprises a dual function supporting element arranged to provide both stationary support for the gearbox 30 and to direct airflow within the gas turbine engine 10. In other words, a single component (i.e. a structural support aerofoil 24a-24h) is arranged to both provide a stationary support for the gearbox 30 and to act as a stationary aerofoil to direct airflow.

The co-rotating arrangement of input and output drives has an effect on the level of reaction force required at the stationary supporting structure 24 to restrain the gearbox from moving relative to the engine 10.

Referring again to Figure 4, the input drive 44 is driven by a driving torque D and the output drive 46 drives a load resulting in a load reaction torque T. The driving torque D is given by the relation T/R, where R is the speed reduction ratio between the input drive 44 and output drive 46 (assuming no power loss in the mechanical power converter). In the case of a co-rotating input and output, the restraint torque, $T_R$, required to restrain the gearbox 30 in a stationary condition is given by:

$$T_R = T\text{-}T/R = T(1\text{-}1/R). \tag{1}$$

From this expression, it can be seen that the arrangement of input drive 44 and output drive 46 produces a reduced level of restraint torque in comparison to a contra-rotating gearbox in which the input and output rotate in opposite directions (i.e. if R is negative in the expression above). For comparison, for the contra-rotating case the restrain torque would be given by:

$$T_R = T\text{+}T/R = T(1\text{+}1/R). \tag{2}$$

Because of the lower level of restraint torque required for a co-rotating type mechanical power converter 42, the structural requirements of the stationary supporting 24 structure are reduced. This allows the stationary supporting structure 24 to be formed by a structural aerofoil 24a or aerofoils 24a-24h serving the combined purpose of torque transmission and airflow manipulation.

The combined function of the structural support aerofoil(s) 24a-24h may mean that separate non-aerofoil structural support struts and non-structural stationary aerofoils are not required. This may reduce the component count for the engine, thus reducing the engine weight, complexity and overall size (or may help free up space within the engine for other components).

In the described example, the stationary support for the gearbox 30 may be provided only by the stationary supporting structure 24. The stationary supporting structure 24 may comprise only one or more structural support aerofoils 24a-24h. In other words, no additional supporting components may be provided to restrain the gearbox from rotation relative to the rest of the engine. In other embodiments, additional supporting elements may be provided in addition to the structural support aerofoils 24a-24h described herein.

The one or more structural support aerofoils 24a-24h may provide a stationary support for at least the gearbox 30. In some examples, the structural support aerofoils 24a-24h may additionally provide stationary support for other components or structures within the gas turbine engine 10.

Each of the one or more structural support aerofoils 24a-24h may be defined by an associated one or more physical characteristics. The physical characteristics may define the structural strength of each structural support aerofoil 24a-24h and the level of airflow manipulation that they provide. The physical characteristics may be determined according to both a desired level of airflow direction and also a desired structural strength. This may allow a suitable balance between the two functions to be provided by a single component. This is different from known arrangements where the physical properties of the non-aerofoil stationary structural support are determined only by the required level of structural strength required to restrain the gearbox. The physical properties of a non-structural stationary aerofoil are determined only by the need to control airflow, rather than any structural support requirements.

The desired level of airflow direction may be sufficient to remove turbulence from an airflow that has been energised by the fan 23. The desired level of strength may be sufficient to resist movement of the mechanical power converter relative to the engine.

The one or more physical characteristics may comprise a respective cross sectional shape of each structural support aerofoil 24a-24h. An example of a cross section view through a structural support aerofoil 24a is shown in Figure 5.

As can be seen in Figure 5, the structural support aerofoil 24a has a cross sectional aerofoil shape having a chord length $C$ and a thickness $t$. The shape of the structural support aerofoil 24a is defined by a thickness to chord length ratio given by $t/C$. The thickness to chord length ratio may be chosen to provide a balance between structural support and airflow direction requirements.

The cross sectional shape of the structural support aerofoil 24a shown in Figure 5 is only one example. The structural support aerofoil may have any other suitable shape that provides a suitable level of airflow direction.

The one or more physical characteristics defining the structural aerofoil(s) 24a-24h may further comprise a length of each structural support aerofoil 24a-24h. The length may be the length a respective structural support aerofoil 24a extends between a direct or indirect coupling to the gearbox 30 and another stationary part of the engine (e.g. corresponding to a length along a body of the structural support aerofoil 24a in a direction running in and out of the page in the cross section view of Figure 5). The length may be chosen to provide a suitable balance of strength and airflow direction.

The stationary supporting structure 24 may comprise a plurality of structural support aerofoils 24a-24h as illustrated in the cross sectional view shown in Figure 6. Figure 6 shows a cross section through the plane marked AA in Figure 2, with the internal components of the gearbox 30 and splitter 48 omitted. Each of the structural support aerofoils 24a-24h may extend away from the gearbox 30 in a radial direction relative to the rotational axis 9 of the engine 10. Each of the structural support aerofoils 24a-24h may be positioned to provide suitable levels of structural support and airflow direction. For example, the structural support aerofoils 24a-24h may be distributed at regular intervals around the rotational axis to provide a symmetrical degree of structural support and airflow direction. In other embodiments, the structural support aerofoils 24a-24h may be distributed at irregular intervals around the rotational axis to provide varied levels of support and airflow direction as required.

Each of the structural support aerofoils 24a-24h may have the same physical characteristics (e.g. may be the same size, shape, length) defined above so as to provide symmetry around the rotational axis of the engine. In other embodiments, the structural support aerofoils 24a-24h may not all be the same as each other. They may, for example, vary in size and shape at different points around the gearbox 30.

The number of structural support aerofoils 24a-24h may be determined according to a desired overall level of airflow direction and restraint force transmission provided by the stationary supporting structure 24. The number of structural support aerofoils 24a-24h may be less that the number of non-structural stationary aerofoils that would otherwise be provided, but may be more than the number of non-aerofoil support struts.

The number of structural support aerofoils 24a-24h may be chosen to provide a suitable balance of overall structural support and airflow direction.

Each of the structural support aerofoils 24a-24h may be aligned at the same position along an axial direction aligned with the rotational axis 9. In other words, the structural support aerofoils 24a-24h may be aligned in a ring at least partly surrounding the gearbox 30. This may reduce the length of the stationary supporting structure 24 along the axial direction of the engine 10 and may free up space for other components or allow the overall length of the engine 10 to be reduced.

The structural support aerofoil or aerofoils 24a-24h may be rigidly coupled to part of the gearbox 30 in order to provide a suitable stationary mounting and resist rotation of the gearbox 30. The structural support aerofoil or aerofoils 24a may, for example, be arranged to provide a stationary support for the ring gear 38. As can be seen in Figure 6, the structural support aerofoil(s) 24a-24h may be connected via a respective linkage 40a-40h to part of gearbox 30, e.g. to the ring gear 38. In other examples, the stationary supporting structure 24 may be coupled directly to the ring gear 38 (or other part of the gearbox 30) without the need for the linkages 40a-40h. In yet other embodiments, the structural support aerofoil(s) 24a-24h may be coupled to any other suitable point on the gearbox 30 or other mechanical power converter, such as a casing or housing, for example.

As discussed above the structural support aerofoil or aerofoils 24a-24h are arranged to direct airflow within the engine 10. The structural support aerofoil(s) 24a-24h may be arranged downstream of the fan 23 so as to direct energised turbulent air generated by the fan into a suitable airflow through the engine 10. For example, the one or more structural support aerofoils 24a-24h may be arranged to direct at least part of the core airflow A that flows through the engine core 11.

The gas turbine engine 10 may further comprise a splitter 48 arranged to separate the core airflow A from the bypass airflow B. The splitter 48 may comprise a structural element adapted to divide the airflow from the fan 23 into separate air streams. The structural support aerofoil(s) 24a-24h may extend at least partly between the gearbox 30 and the splitter 48 so as to direct at least a portion of the core airflow A. This may allow the structural support aerofoils 24a-24h to provide both stationary support for the gearbox 30 and direct airflow from the fan 23 into the engine core 11.

The position of the structural support aerofoil(s) 24a-24h within the engine 10 shown in Figure 3 and Figure 6 is only one example. The structural support aerofoil(s) 24a-24h may be located to direct the bypass airflow B, or the both the bypass airflow B and the core airflow A, or any other relevant airflow within the engine 10. They may, for example, extend to the nacelle 21

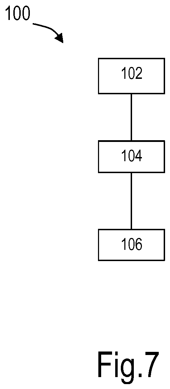

A method 100 of supporting a mechanical power converter in a gas turbine engine is illustrated in Figure 7. As described above, the mechanical power converter may be arranged to receive an input drive and produce an output drive, wherein the output drive has the same rotational direction as the input drive.

The method 100 comprises providing 104 a stationary supporting structure 24 comprising one or more structural support aerofoils 24a-24h. The structural aerofoils 24a-24h provided may be as defined anywhere herein and may have any of the features defined in the examples above.

The method 100 further comprises directing 104 airflow within the gas turbine engine using the one or more structural support aerofoils 24a-24h. The airflow may be directed as defined above. For example, airflow energised by the fan 23 may be manipulated by the one or more structural aerofoils 24a-24h to remove turbulence and direct air through the engine core 11 and/or the bypass duct.

The method 100 further comprises resisting 106 movement of the mechanical power converter relative to the gas turbine engine 10 using the one of more structural support aerofoils 24a-24h. As described above, this may comprise transmitting a restraining force via the one of more structural support aerofoils 24a-24h to restrain the mechanical power converter from movement relative to the gas turbine engine.

In an example, a gas turbine engine (10) for an aircraft, comprises a mechanical power converter (42) arranged to receive an input drive (44) and produce a output drive (46), wherein the output drive (44) has the same rotational direction as the input drive (46); and a dual functioning supporting structure element (24a, 24b, 24c, 24d, 24e, 24f, 24g, 24h) arranged to provide stationary support for the mechanical power converter (42) and to direct airflow within the gas turbine engine (10).

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A gas turbine engine (10) for an aircraft, comprising:

   a mechanical power converter (42) arranged to receive an input drive (44) and produce an output drive (46), wherein the output drive (46) has the same rotational direction as the input drive (44); and
   a stationary supporting structure (24) arranged to provide a stationary support for the mechanical power converter (42), wherein:
   the stationary supporting structure (24) comprises one or more structural support aerofoils (24a, 24b, 24c, 24d, 24e, 24f, 24g, 24h).

2. The gas turbine engine (10) according to claim 1, wherein each of the one or more structural support aerofoils (24a, 24b, 24c, 24d, 24e, 24f, 24g, 24h) are arranged to both:

   direct airflow within the gas turbine engine (10); and
   transmit a restraint reaction force.

3. The gas turbine engine (10) according to claim 1 or claim 2, wherein:
   each of the one or more structural support aerofoils (24a, 24b, 24c, 24d, 24e, 24f, 24g, 24h) are defined by one or more physical characteristics; and wherein:
   the one or more physical characteristics are each determined according to a desired level of airflow direction and structural strength of the respective structural support aerofoil (24a, 24b, 24c, 24d, 24e, 24f, 24g, 24h).

4. The gas turbine engine (10) according to claim 3, wherein the one or more physical characteristics comprise a cross sectional shape of each structural support aerofoil (24a, 24b, 24c, 24d, 24e, 24f, 24g, 24h).

5. The gas turbine engine (10) according to claim 4, wherein the cross sectional shape comprises an aerofoil shape defined by a thickness to chord length ratio.

6. The gas turbine engine (10) according to any of claims 3 to 5, wherein the one or more physical characteristics comprise a length of each structural support aerofoil (24a, 24b, 24c, 24d, 24e, 24f, 24g, 24h).

7. The gas turbine engine (10) according to any preceding claim, wherein the stationary supporting structure (24) comprises a plurality of structural support aerofoils (24a, 24b, 24c, 24d, 24e, 24f, 24g, 24h).

8. The gas turbine engine (10) according to claim 7, wherein the number of structural support aerofoils (24a, 24b, 24c, 24d, 24e, 24f, 24g, 24h) is determined according to an overall level of airflow direction and restraint force transmission provided by the stationary supporting structure (24).

9. The gas turbine engine (10) according to claim 7 or claim 8 wherein the gas turbine engine (10) has a rotational axis (9), and wherein:

the plurality of structural support aerofoils (24a, 24b, 24c, 24d, 24e, 24f, 24g, 24h) each extend away from the mechanical power converter (42) in a radial direction relative to the rotational axis (9); and
each of the structural support aerofoils (24a, 24b, 24c, 24d, 24e, 24f, 24g, 24h) are aligned at the same position along an axial direction aligned with the rotational axis (9).

10. The gas turbine engine (10) according to any preceding claim, wherein the mechanical power converter (42) comprises an epicyclic gearbox (30).

11. The gas turbine engine (10) according to claim 10, wherein the epicyclic gearbox (30) comprises a planetary gearbox and optionally or preferably wherein:

(a) the planetary gearbox comprises a ring gear (38), and
(b) the one or more structural support aerofoils (24a, 24b, 24c, 24d, 24e, 24f, 24g, 24h) are arranged to provide a stationary support for the ring gear (38).

12. The gas turbine engine (10) according to any preceding claim, the gas turbine engine (10) further comprising an engine core (11) arranged to receive a core airflow (A), and wherein the one or more structural support aerofoils (24a, 24b, 24c, 24d, 24e, 24f, 24g, 24h) are arranged to direct at least part of the core airflow (A).

13. The gas turbine engine (10) according to claim 12, further comprising a splitter (48), wherein:

the splitter (48) is arranged to separate the core airflow (A) from a bypass airflow (B) arranged to bypass the engine core (11); and
the one or more structural support aerofoils (24a, 24b, 24c, 24d, 24e, 24f, 24g, 24h) extend at least partly between the mechanical power converter and the splitter (48) to direct at least a portion of the core airflow (A).

14. The gas turbine engine (10) according to any preceding claim, the gas turbine engine (10) further comprising either or both of:

a turbine (19), wherein the input drive (44) is a drive shaft (26) connecting the mechanical power converter (42) to the turbine (19); and
a fan (23), wherein the output drive (46) is a drive shaft (36) connecting the mechanical power converter (42) to the fan (23).

15. A method (100) of supporting a mechanical power converter (42) in a gas turbine engine (10), the mechanical power converter (42) arranged to receive an input drive (44) and produce an output drive (46), wherein the output drive (46) has the same rotational direction as the input drive (44), the method comprising:

providing (104) a stationary supporting structure (24) comprising one or more structural support aerofoils (24a, 24b, 24c, 24d, 24e, 24f, 24g, 24h);
directing (104) airflow within the gas turbine engine using the one or more structural support aerofoils (24a, 24b, 24c, 24d, 24e, 24f, 24g, 24h); and
resisting (106) movement of the mechanical power converter (42) relative to the gas turbine engine using the one of more structural support aerofoils (24a, 24b, 24c, 24d, 24e, 24f, 24g, 24h).

## Fig.1

## Fig.2

FIG. 3

Fig.4

Fig.5

Fig.6

100

Fig.7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 020 953 A1 (ROLLS ROYCE DEUTSCHLAND [DE]) 18 May 2016 (2016-05-18) <br> * figure 2 * <br> * paragraph [0032] - paragraph [0034] * <br> ----- | 1-15 | INV. <br> F02C7/36 <br> F01D25/16 <br> F02K3/06 |
| X | US 2016/102607 A1 (HIERNAUX STÉPHANE [BE]) 14 April 2016 (2016-04-14) <br> * figure 3 * <br> * paragraph [0055] * <br> ----- | 1-15 | |
| X | EP 3 276 153 A1 (ROLLS ROYCE PLC [GB]) 31 January 2018 (2018-01-31) <br> * paragraph [0036] * <br> * figure 2 * <br> ----- | 1-15 | |
| | | | TECHNICAL FIELDS SEARCHED (IPC) <br><br> F02C <br> F01D <br> F02K |

The present search report has been drawn up for all claims

| Place of search | Date of completion of the search | Examiner |
|---|---|---|
| The Hague | 27 September 2019 | Burattini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

# EP 3 572 644 A1

## ANNEX TO THE EUROPEAN SEARCH REPORT
## ON EUROPEAN PATENT APPLICATION NO.

EP 19 16 9449

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2019

| Patent document cited in search report | | Publication date | Patent family member(s) | | Publication date |
|---|---|---|---|---|---|
| EP 3020953 | A1 | 18-05-2016 | EP<br>US | 3020953 A1<br>2016138478 A1 | 18-05-2016<br>19-05-2016 |
| US 2016102607 | A1 | 14-04-2016 | BE<br>CA<br>CN<br>EP<br>RU<br>US | 1024024 B1<br>2904069 A1<br>105508050 A<br>3006713 A1<br>2015140939 A<br>2016102607 A1 | 30-10-2017<br>09-04-2016<br>20-04-2016<br>13-04-2016<br>03-04-2017<br>14-04-2016 |
| EP 3276153 | A1 | 31-01-2018 | EP<br>US | 3276153 A1<br>2018030901 A1 | 31-01-2018<br>01-02-2018 |

EPO FORM P0459

For more details about this annex : see Official Journal of the European Patent Office, No. 12/82